# EUROPÄISCHE PATENTSCHRIFT

(11) **EP 1 346 626 B1**
(45) Veröffentlichungstag und Bekanntmachung des Hinweises auf die Patenterteilung: **04.10.2006**
(21) Anmeldenummer: 03005103.1
(22) Anmeldetag: 07.03.2003
(51) Int. Cl.: A01D 65/00

(54) **Aufbewahrungsvorrichtung für unbenutzte Ährenheber an Getreideschneidwerken**
Storage device for unused grain lifters of a header
Dispositif de stockage pour des releveurs d'épis nonutilisés d'une table de coupe

(30) Priorität: 22.03.2002 DE 10212797
(43) Veröffentlichungstag der Anmeldung: 24.09.2003
(73) Patentinhaber: CNH Belgium N.V., 8210 Zedelgem (BE)
(72) Erfinder: Slabbinck, Freddy C.O., 8210 Zedelgem (BE)
(74) Vertreter: Feldkamp, Rainer

(56) Entgegenhaltungen:
- DE-A- 19 902 459
- FR-A- 2 230 283
- GB-A- 798 039

## Beschreibung

Die Erfindung betrifft eine Aufbewahrungsvorrichtung für unbenutzte Ährenheber an Getreideschneidwerken nach den Merkmalen im Oberbegriff des Patentanspruchs 1.

Ährenheber werden beim Mähen von Getreide unter ungünstigen Bedingungen eingesetzt, worunter insbesondere das Ernten von Lagergetreide fällt. Sie sollen flach auf dem Boden liegende Halme zumindest so weit anheben, daß die Ähren auf den Schneidtisch des Getreideschneidwerks gelangen. Ährenheber für Mähdrescher sind etwa 200 bis 400 Millimeter lange Stahlzinken mit einem von ihrer Spitze nach hinten ansteigenden Gleitbügel, dessen in Fahrtrichtung gesehenes vorderes Stück als Gleitsohle ausgebildet ist. Im hinteren Drittel des Gleitbügels befindet sich eine Halterung, die zu dessen Befestigung am Mähfinger dient. Zusätzlich wird das hintere Ende des Gleitbügels mit der Verschraubung des jeweiligen Mähfingers am Schneidtisch befestigt. Von der Spitze des Ährenhebers aus erstreckt sich ein Hebebügel in einer schräg nach hinten und oben zeigenden Richtung, durch den die auf dem Boden liegenden Halme zum Schneidtisch geleitet werden. In den am meisten in der Praxis anzutreffenden Fällen ist unter genannten ungünstigen Bedingungen jeder vierte Mähfinger mit einem Ährenheber versehen. Durch ihre Arbeit in Bodennähe unterliegen die Ährenheber aber der Gefahr des Verbiegens und sollten daher nur in begründeten Fällen eingesetzt werden. Unter normalen Bedingungen müssen sie aber dennoch schnell verfügbar sein, wofür sich ihre Anbringung in einer Aufbewahrungsvorrichtung an der äußeren Rückwand des Getreideschneidwerks inzwischen bei allen Herstellern von Getreideschneidwerken durchgesetzt hat.

Derartige Aufbewahrungsvorrichtungen für zeitweise unbenutzte Ährenheber sind bereits in einer Vielzahl von Ausführungsvarianten bekannt geworden. Die deutsche Firma CLAAS hat beispielsweise an zwei an der Rückwand des Getreideschneidwerks angeschweißten und seitlich neben dem Zuführschacht des Mähdreschers angeordneten Vertikalträgern je einen Tragbalken einseitig befestigt, die quer zur Fahrtrichtung ausgerichtet sind. Sie haben die Form eines Winkelprofils, auf die die Ährenheber mit ihren Öffnungen in der Halterung mit der Spitze nach unten hängend nacheinander aufgesteckt werden, Damit sie während der Fahrt nicht vom Tragbalken herunterfallen können, versperrt ein Federstecker deren freies Ende. Nachteilig an dieser Lösung ist, daß keine individuellen Befestigungsmöglichkeiten für jeden einzelnen Ährenheber vorgesehen sind, wodurch die lose herabhängenden Ährenheber während der Fahrt seitlich aneinanderschlagen. Die Folge davon ist, daß unerwünschte Geräusche entstehen, daß die Lackschicht zerstört wird und daß diese mehr oder weniger wahllose Anordnung einen unordentlichen Gesamteindruck hinterläßt. Auch die Entnahme und das Einstecken der Ährenheber ist nicht ganz so einfach, da sie dazu lange Wege auf dem Tragbalken gleiten müssen, wodurch mit körperlichen Anstrengungen verbundene Verklemmungen nicht auszuschließen sind. Noch zu bemängeln ist, daß zum Vermeiden von Verlusten von Ährenhebern durch Herabfallen zusätzliche Sicherungsmittel notwendig sind.

Eine zweite Ausführungsvariante einer derartigen Aufbewahrungseinrichtung für Ährenheber ist an den Getreideschneidwerken der deutschen Firma CASE HARVESTING SYSTEMS GmbH verwirklicht, wo mit einem gewissen Abstand zur Rückwand des Getreideschneidwerks an dieser ein oberes und ein unteres Winkelprofil angeschweißt sind. Über diese Winkelprofile werden die Ährenheber von oben eingehängt, wobei ihre Spitzen nach oben zeigen. Die Gleitbügel haben zur Rückwand des Getreideschneidwerks so viel Platz, daß sie ungehindert auf die Winkelprofile gehängt werden können. Da es auch hier keine individuellen Befestigungsmöglichkeiten für die Ährenheber gibt, können auch sie seitlich zusammenschlagen und zusätzlich noch in der Fahrtrichtung des Mähdreschers gesehen ein Stück vor und zurück schwingen, so daß bis auf die beschwerliche Entnahme und das Einhängen die gleichen Nachteile wie bei der vorstehend beschriebenen Aufbewahrungsvorrichtung vorhanden sind.

Die dritte Ausführungsvariante wird von der dänischen Firma DRONNING-BORG angeboten, die bezüglich der Richtung der aufgehängten Ährenheber mit der Lösung von Case Harvesting Systems übereinstimmt. Der erste Unterschied besteht darin, daß anstelle der beiden Winkelprofile hier aufrecht stehende Flachstähle verwendet werden. Da diese Flachstähle den aufgehängten Ährenhebern einen relativ großen Bewegungsspielraum lassen, sind als zweiter Unterschied die Spitzen der Ährenheber so in einem nach unten offenen Blechkasten aufgenommen, daß deren Bewegungsspielraum etwas eingeschränkt ist. Zum Einhängen und zur Entnahme muß der Blechkasten nach dem Lösen von zwei seitlichen Verriegelungen nach hinten um 90 Grad abgeklappt werden. An dieser Aufbewahrungsvorrichtung sind ebenfalls die fehlenden individuellen Befestigungsmöglichkeiten zu bemängeln, so daß die Ährenheber seitlich aneinanderschlagen und vor und zurück schwingen können. Ein weiterer Nachteil liegt in den hohen Herstellungskosten, die durch den schwenkbaren Blechkasten mit den Verriegelungen verursacht werden. Abschließend wäre noch auf die Aufbewahrungsvorrichtung für Ährenheber von der amerikanischen Firma JOHN DEERE hinzuweisen, bei der oben an der Rückwand des Getreideschneidwerks nebeneinander zwei Aufbewahrungsbügel angeschweißt sind, die aus je zwei Befestigungsstegen bestehen, zwischen denen sich eine Tragleiste zum Einhängen der Ährenheber erstreckt. Die Tragleisten sind mit seitlich voneinander beabstandeten und diese überragenden Stützblechen besetzt, die schräg nach oben auf die Rückwand des Getreideschneidwerks zeigen. Die Ährenheber werden mit den inneren Hohlprofilen der Hebebügel auf die Stützbleche gehängt und deren Gleitschienen stützen sich an den unteren Kanten der Tragleisten ab. Obwohl bei dieser Aufbewahrungsvorrichtung die Ährenheber individuelle Befestigungsmöglichkeiten haben, verbleibt der wesentlichste Nachteil, daß sie dennoch in Längsrichtung des Mähdreschers gesehen in einem zu großen Bereich vor und zurück schwingen können.

Deshalb liegt der Erfindung die Aufgabe zugrunde, eine Aufbewahrungsvorrichtung für unbenutzte Ährenheber an Getreideschneidwerken zu schaffen, wo die Ährenheber in einem gewissen Abstand voneinander und völlig unbeweglich befestigt sind, wo die Entnahme und das Einstecken der Ährenheber in kürzester Zeit und ohne körperliche Anstrengungen durchführbar ist und die darüber hinaus noch mit geringen Kosten herstellbar ist.

Diese Aufgabe wird gemäß der Erfindung durch die Merkmale des Patentanspruchs 1 gelöst, wobei in den Unteransprüche Merkmale aufgeführt sind, die diese Lösung in vorteilhafter Weise weiterentwickeln.

Dazu ist links und/oder rechts neben dem Zuführschacht eines Mähdreschers an der Rückwand eines Getreideschneidwerks ein Aufbewahrungsbügel zur Aufbewahrung der zeitweise nicht eingesetzten Ährenheber befestigt, zwischen dessen beiden Befestigungsstegen sich eine in Richtung der Rückwand zeigende Tragleiste erstreckt. Sie befindet sich dabei in einem solchen Abstand hinter der Rückwand, daß dazwischen entweder die Hebebügel oder die Gleitsohlen der Ährenheber Platz finden, wenn die Ährenheber von oben in einem bestimmten seitlichen Abstand nebeneinander auf die Tragleiste gehängt werden. Ein gleichmäßiger seitlicher Abstand wird durch in gleicher Weise an der Tragleiste befestigte und von der Tragleiste abstehende Stützbleche erreicht, die in die inneren Hohlprofile der Hebebügel hineinragen. Dabei ist es unerheblich, ob die Stützbleche von der Tragleiste in Fahrtrichtung gesehen nach vorn oder nach hinten abstehen, weil das lediglich die Einsteckstellung der Ährenheber festlegt, das heißt, ob sich die Hebebügel oder die Gleitsohlen der Ährenheber unmittelbar hinter der Rückwand des Getreideschneidwerks befinden. Es wird ausdrücklich darauf hingewiesen, daß beide Möglichkeiten im Schutzumfang dieser Erfindung liegen.

Damit die Ährenheber völlig unbeweglich auf der Tragstange sitzen, besteht die Tragstange aus zwei Schenkeln, die im Querschnitt gesehen eine sich von oben nach unten öffnende Form bilden. Deren Außenkontur ist dabei exakt so gestaltet wie die sich ebenfalls von oben nach unten öffnenden Innenkonturen zwischen den Innenkanten der Gleitsohlen und den Hebebügeln in der Spitze der Ährenheber. Durch diese spielfreie Anlage haben sie auch keine Möglichkeit mehr, in Längsrichtung des Mähdreschers gesehen zu pendeln. Einen zusätzlichen seitlichen Halt bekommen sie durch die Stützbleche, die sich als Fortsetzung an die Unterseite eines der beiden Schenkel anschließen und gegenüber dessen Verlauf lediglich nach außen abgewinkelt sind.

In einer vorteilhaften Ausgestaltung der Erfindung nach den Merkmalen des Unteranspruchs 2 bilden die Außenkonturen der Schenkel der Tragstange ein nach unten offenes V, was die am einfachsten herzustellende Form sowohl für die Tragstange als auch für die Ährenheber ist.

Eine weitere bevorzugte Ausführungsform der Erfindung nach den Merkmalen des Unteranspruchs 3 wird in der Befestigung der Befestigungsstege des Aufbewahrungsbügels mittels Schrauben an der Rückwand des Getreideschneidwerks gesehen, weil es dadurch einfacher wird, Getreideschneidwerke auch später mit einer solchen Aufbewahrungsvorrichtung nachzurüsten.

Eine zweckmäßige Ausgestaltung der Erfindung ist nach den Merkmalen des Unteranspruchs 4 die Ausbildung der Profile Stützbleche in der Form, daß sie die Hohlprofile der Hebebügel voll ausfüllen, weil dadurch der beste seitliche Halt der Ährenheber auf der Tragstange gewährleistet ist.

Zusammenfassend stellen sich damit die Vorteile der Erfindung so dar, daß die Ährenheber in einem gewissen definierten Abstand und absolut unbeweglich auf der Tragstange befestigt sind. Auch die Entnahme und das Einstecken der aufzubewahrenden Ährenheber geht schnell und ist mit keinerlei körperlichen Anstrengungen verbunden. Schließlich ist eine derartig gestaltete Aufbewahrungsvorrichtung auch in der Herstellung kostengünstig.

Die Erfindung soll nun anhand eines Ausführungsbeispieles näher erläutert werden, wobei die einzelnen Figuren zeigen:
- Fig. 1:: eine perspektivische Ansicht von hinten auf die Aufbewahrungsvorrichtung mit vier eingehängten Ährenhebern
- Fig. 2:: einen Schnitt nach Figur 1 als Teilschnitt durch einen eingehängten Ährenheber

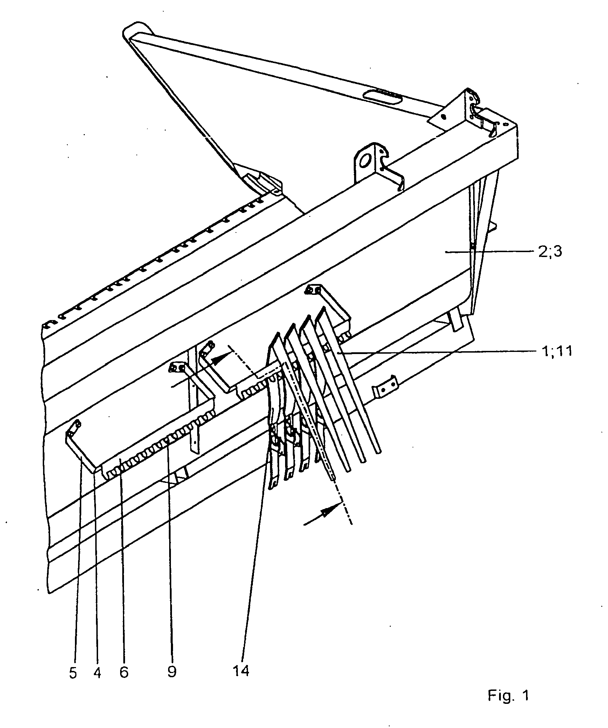

In Figur 1 ist eine Ausführungsmöglichkeit einer Aufbewahrungseinrichtung für zeitweise unbenutzte Ährenheber 1 zu sehen, die auf der in Fahrtrichtung des Mähdreschers gesehenen rechten Seite des Getreideschneidwerks 2 an dessen Rückwand 3 angeordnet ist. Sie ist in dem Fall aus Stabilitätsgründen zweiteilig ausgebildet, deren Einzelteile jedoch völlig identisch sind. Sie besteht aus einem Aufbewahrungsbügel 4, zwischen dessen seitlich voneinander beabstandeten Befestigungsstegen 5 sich eine in Richtung der Rückwand 3 zeigende Tragleiste 6 erstreckt. Die vorderen Enden der Befestigungsstege 5 sind mit Schrauben 7 an der Rückwand 3 des Getreideschneidwerks 2 lösbar befestigt.

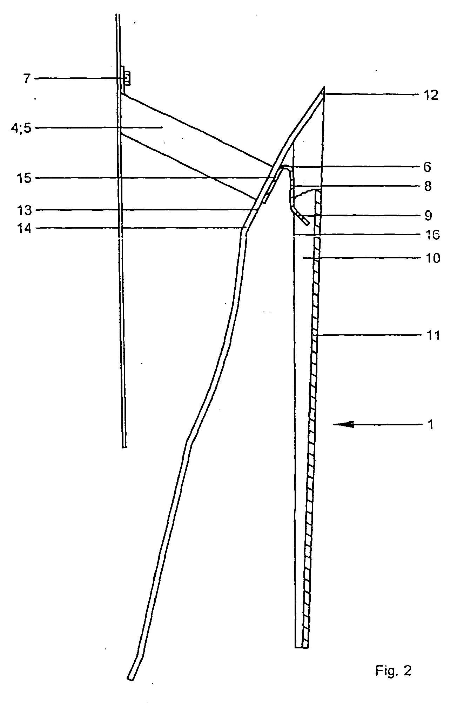

Wie Figur 2 zeigt hat die Tragleiste 6 einen Querschnitt wie ein nach unten offenes V. Der hintere Schenkel 8 der Tragleiste 6 ist an seinem unteren Ende mit Stützblechen 9 besetzt, die untereinander einen gleichmäßigen Abstand aufweisen und gegenüber dem Verlauf des hinteren Schenkels 8 nach außen abgewinkelt sind. Sie ragen in die inneren Hohlprofile 10 der Hebebügel 11 der Ährenheber 1 hinein, wenn diese mit der Spitze 12 nach oben zeigend in die Tragleiste 6 eingehängt sind. Die Stützbleche 9 haben ein solches Profil, daß sie damit die inneren Hohlprofile 10 der Hebebügel 11 voll ausfüllen. In dieser Position liegen die Innenkanten 13 der Gleitsohlen 14 der Ährenheber 1 am vorderen Schenkel 15 der Tragleiste 6 und die Innenkanten 16 der Hebebügel 11 über deren volle Länge am hinteren Schenkel 8 spielfrei an.

### Bezugszeichenaufstellung

- 1: Ährenheber
- 2: Getreideschneidwerk
- 3: Rückwand
- 4: Aufbewahrungsbügel
- 5: Befestigungssteg
- 6: Tragleiste
- 7: Schrauben
- 8: hinterer Schenkel
- 9: Stützblech
- 10: inneres Hohlprofil
- 11: Hebebügel
- 12: Spitze
- 13: Innenkante
- 14: Gleitsohle
- 15: vorderer Schenkel
- 16: Innenkante

## Patentansprüche

1. Aufbewahrungsvorrichtung für unbenutzte Ährenheber (1) an Getreideschneidwerken (2), die ein- oder beidseitig neben dem Zuführschacht eines Mähdreschers in dessen Fahrtrichtung gesehen hinten an der Rückwand (3) des Getreideschneidwerks (2) angeordnet ist, bestehend aus:
◆ einem mit der Rückwand (3) verbundenen Aufbewahrungsbügel (4), zwischen dessen seitlich voneinander beabstandeten Befestigungsstegen (5) sich eine in Richtung der Rückwand (3) zeigende Tragleiste (6) erstreckt,
◆ mehreren mit der Tragleiste (6) verbundenen und von dieser abstehenden Stützblechen (9), die untereinander einen gleichmäßigen Abstand aufweisen und die in die inneren Hohlprofile (10) der Hebebügel (11) der Ährenheber (1) ragen, wenn die Ährenheber (1) mit der Spitze (12) nach oben zeigend in die Tragleiste (6) eingehängt sind,
**dadurch gekennzeichnet, daß**
a) die Tragleiste (6) im Querschnitt gesehen sich eine von oben nach unten öffnende Form aufweist, wobei die Außenkontur ihrer Schenkel (8;15) der Innenkontur zwischen den Innenkanten (13) der Gleitsohlen (14) und den Innenkanten (16) der Hebebügel (11) in der Spitze (12) der Ährenheber (1) entspricht,
b) einer der Schenkel (8;15) an seiner Unterseite mit den Stützblechen (9) besetzt ist, die gegenüber dem Verlauf des betreffenden Schenkels (8;15) nach außen abgewinkelt sind.

2. Aufbewahrungsvorrichtung nach Anspruch 1, **dadurch gekennzeichnet, daß** die Außenkontur der Schenkel (8;15) eine nach unten offene V- Form bildet.

3. Aufbewahrungsvorrichtung nach Anspruch 1, **dadurch gekennzeichnet, daß** die Befestigungsstege (5) des Aufbewahrungsbügels (4) an der Rückwand (3) des Getreideschneidwerks (2) mit Schrauben (7) befestigt sind.

4. Aufbewahrungsvorrichtung nach Anspruch 1, **dadurch gekennzeichnet, daß** das Profil der Stützbleche (9) so ausgebildet ist, daß sie damit das innere Hohlprofil (10) der Hebebügel (11) voll ausfüllen.

## Claims

1. Retaining device for unused crop lifters (1) on cereal cutting mechanisms (2) which is located on the rear wall (3) of the cereal cutting mechanism (2) on one or both sides alongside the intake of a combine harvester, seen in its direction of travel, consisting of:
* a retaining shackle (4) connected to the rear wall (3) between the laterally-spaced mounting webs (5) of which a mounting rail (6) extends in the direction of the rear wall (3);
* several supporting plates (9) connected to the mounting rail (6) and proud of it, which are at a constant distance from each other and which protrude into the inner hollow sections (10) of the lifting tines (11) of the crop lifters (1) when the crop lifters (1) are suspended in the mounting rail (6) with the tip (12) pointing upwards,
**characterised in that**:
a) seen in cross-section, the mounting rail (6) has a form opening from top to bottom, the outer surface of its legs (8;15) corresponding to the inner surface between the inner edges (13) of the sole plates (14) and the inner edges (16) of the lifting tines (11) at the tip (12) of the crop lifters (1);
b) the underside of one of the legs (8; 15) is fitted with supporting plates (9) which are angled outwards from the alignment of the leg (8; 15) in question.

2. Retaining device in accordance with claim 1, **characterised in that** the outer surface of the legs (8; 15) forms the shape of an inverted V.

3. Retaining device in accordance with claim 1, **characterised in that** the mounting webs (5) of the retaining shackle (4) on the rear wall (3) of the cereal cutting mechanism (2) are mounted by bolts (7).

4. Retaining device in accordance with claim 1, **characterised in that** the section of the supporting plates (9) is formed so that it fills the inner hollow section (10) of the lifting tines (11).

## Revendications

1. Dispositif de garde pour releveurs d"épis inutilisés (1) sur des barres de coupe pour céréales (2) qui est disposé d'un seul côté ou de part et d'autre de la gaine d'amenée d'une moissonneuse-batteuse, à l'arrière vu dans le sens de sa marche, sur le panneau arrière (3) de la barre de coupe pour céréales (2), comprenant :
* un étrier de garde (4) relié avec le panneau arrière (3) entre les brides de fixation (5) distantes latéralement les uns des autres duquel un tasseau (6) orienté en direction du panneau arrière (3), s'étend.
* plusieurs tôles-support (9) reliées au tasseau (6) et distantes de celui-ci qui présentent une distance uniforme entre elles et qui dépassent sur les profilés creux intérieurs (10) des étriers de levage (11) des releveurs d'épis (1), lorsque les releveurs d'épis (1) sont suspendus au tasseau (6), la pointe (12) est dirigée vers le haut.
**caractérisé en ce que**
a) le tasseau (6) vu en section transversale présente une forme s'ouvrant de haut en bas, le contour extérieur de ses montant (8; 15) correspondant au contour intérieur entre les faces intérieures (13) des semelles mobiles (14) et les faces intérieures (16) des étriers de levage (11) dans la pointe (12) des releveurs d'épis (1).
b) l'un des montants (8; 15) est occupé sur sa face inférieure par les tôles-support (9) qui sont coudées vers l'extérieur en opposition au tracé du montant correspondant (8; 15).

2. Dispositif de garde selon la revendication 1, **caractérisé en ce que** le contour extérieur des montants (8; 15) forment un V ouvert vers le bas.

3. Dispositif de garde selon la revendication 1, **caractérisé en ce que** les brides de fixation (5) de l'étrier de garde (4) sont fixées sur le panneau arrière (3) de la barre de coupe pour céréales (2) au moyen de vis (7).

4. Dispositif de garde selon la revendication 1, **caractérisé en ce que** le profilé des tôles-support (9) est formé de manière à ce que celles-ci remplissent ainsi complètement le profilé creux intérieur (10) des étriers de levage (11).
